# EUROPEAN PATENT APPLICATION

(11) **EP 3 721 732 A1**
(43) Date of publication of application: **14.10.2020**
(21) Application number: 19169062.7
(22) Date of filing: 12.04.2019
(51) Int. Cl.: A24F 47/00, H02J 7/00

(54) **CHARGER FOR SMOKING SUBSTITUTE DEVICE**

(71) Applicant: NERUDIA LIMITED, Liverpool Merseyside L24 9HP (GB)
(72) Inventor: ILLIDGE, Benjamin, Speke Liverpool L24 9HP (GB); SUDLOW, Thomas, Speke Liverpool L24 9HP (GB)
(74) Representative: Mewburn Ellis LLP

(57) **Abstract**

Various embodiments provide a charger for a smoking substitute device, the charger comprising: a body having a rechargeable battery disposed therein; and a charging assembly for charging the smoking substitute device from the rechargeable battery, the charging assembly comprising a connection interface arranged to connect to the smoking substitute device; wherein the charger is connectable to an external power source such that, when the connection interface is connected to the smoking substitute device and the charger is connected to the external power source, the charger is configured to simultaneously charge the rechargeable battery and the smoking substitute device. Some other embodiments provide a smoking substitute system including the charger and the smoking substitute device.

## Description

### Field of the Invention

The present invention relates to a charger for a smoking substitute device.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices include electronic systems that permit a user to simulate the act of smoking by producing an aerosol (also referred to as a "vapour") that is drawn into the lungs through the mouth (inhaled) and then exhaled. The inhaled aerosol typically bears nicotine and/or a flavourant without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and with combustible tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. There are a number of different categories of smoking substitute devices, each utilising a different smoking substitute approach.

One approach is the so-called "vaping" approach, in which a vaporisable liquid, typically referred to (and referred to herein) as "e-liquid", is heated by a heating device (referred to herein as an electronic cigarette or "e-cigarette" device) to produce an aerosol vapour which is inhaled by a user. The e-liquid typically includes a base liquid as well as nicotine and/or a flavourant. The resulting vapour therefore also typically contains nicotine and/or a flavourant. The base liquid may include propylene glycol and/or vegetable glycerine.

A typical e-cigarette device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

E-cigarettes can be configured in a variety of ways. For example, there are "closed system" vaping smoking substitute devices, which typically have a sealed tank and heating element. The tank is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, that consumable is disposed of. The main body can be reused by connecting it to a new, replacement, consumable. Another subset of closed system vaping smoking substitute devices are completely disposable, and intended for one-use only.

There are also "open system" vaping smoking substitute devices which typically have a tank that is configured to be refilled by a user. In this way the entire device can be used multiple times.

An example vaping smoking substitute devices is the myblu™ e-cigarette. The myblu™ e-cigarette is a closed system which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heater, which for this device is a heating filament coiled around a portion of a wick. The wick is partially immersed in the e-liquid, and conveys e-liquid from the tank to the heating filament. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

The rechargeable battery in the main body is typically recharged using a power cable for connecting the main body to an external power source.

The present disclosure has been devised in the light of the above considerations.

### Summary of the Invention

At its most general, the present invention relates to a charger having a rechargeable battery for charging a smoking substitute device. The charger is configured to enable pass-through charging, such that when the charger is connected the smoking substitute device and to an external power source (e.g. via a power cable), both the smoking substitute device and the rechargeable battery in the charger are simultaneously charged.

In this manner, a user may use the smoking substitute device during charging, as the charger supplies power to the smoking substitute device during charging. Moreover, the charger may function as a spare battery pack for the smoking substitute device, which the user can use to power the smoking substitute device when the smoking substitute device runs out of power (e.g. when an internal battery of the smoking substitute device becomes depleted). This may serve to increase the amount of time that the smoking substitute can be used "on the go", i.e. without having to connect it to an external power source.

This may in turn improve mobility of a user of the smoking substitute device. Charging the charger and the smoking substitute device simultaneously may ensure that the rechargeable battery in the charger is charged, without having to charge the charger separately from the smoking substitute device. This may ensure that the charger is ready for use when it is needed, e.g. when the internal battery in the smoking substitute device becomes depleted. As the charger fulfils the dual functions of charging the smoking substitute device and providing a spare battery pack, there may be no need for the user to carry a charger and separate battery pack, thus reducing the number of components that a user may need to ca rry.

According to a first aspect of the invention, there is provided a charger for a smoking substitute device, the charger comprising: a body having a rechargeable battery disposed therein; and a charging assembly for charging the smoking substitute device from the rechargeable battery, the charging assembly comprising a connection interface arranged to connect to the smoking substitute device;; wherein the charger is connectable to an external power source such that, when the connection interface is connected to the smoking substitute device and the charger is connected to the external power source, the charger is configured to simultaneously charge the rechargeable battery and the smoking substitute device.

In this manner, when the charger is connected to the external power source, and the connection interface is connected to the smoking substitute device, both the rechargeable battery and the smoking substitute device may be simultaneously charged. Such simultaneous charging of the charger and the device is typically referred to as "pass-through charging". During pass-through charging, the rechargeable battery may be charged by power from the external power source, whilst the smoking substitute device may be charged by an output from the rechargeable battery. Then, following charging (i.e. after the charger is disconnected from the external power source), both the rechargeable battery in the charger and the smoking substitute device may be charged. In particular, following charging, both the rechargeable battery in the charger and the smoking substitute device may be fully charged. This may enable prolonged use of the smoking substitute device, without having to connect the smoking substitute device or the charger to an external power source. In contrast, in chargers where pass-through charging is not implemented, only one of the rechargeable battery in the charger and the smoking substitute device may be charged at a time, so that they may not both be fully charged following charging. The connection interface of the charger may be connected to the smoking substitute device to deliver power from the rechargeable battery to the smoking substitute device, in order to charge the smoking substitute device. As a result, the charger may be used to charge the smoking substitute device even when no external power source is available.

The rechargeable battery in the charger may be any suitable type of known rechargeable battery, such as a lithium-ion or a lithium-polymer rechargeable battery. As an example, the rechargeable battery may have a capacity of at least 150 mAh. This may correspond to approximately 50% of a battery capacity of the smoking substitute device. In preferred embodiments, the rechargeable battery may have a larger capacity, e.g. 200 mAh, 250 mAh, 300 mAh, 350 mAh. A larger capacity of the rechargeable battery may enable the charger to provide a greater charge to the smoking substitute device.

The rechargeable battery is disposed in the body, e.g. it may be enclosed within the body. The body may include a housing which encloses the rechargeable battery and other electrical components of the charger. The body may, for example, be made of a plastic material, e.g. a moulded and/or 3D-printed plastic material. The charger may include a charging circuit (e.g. disposed within the body), arranged to control charging of the rechargeable battery using power from the external power source.

An output of the rechargeable battery may be electrically connected to the connection interface via a first power path, so that the smoking substitute device can be recharged by the rechargeable battery when the smoking substitute device is connected to the connection interface. The charger may further include a pass-through path which is arranged to pass power (or an input voltage) from the external power source to the connection interface, in order to charge the smoking substitute device from the external power source when the smoking substitute device is connected to the connection interface. In this manner, a smoking substitute device connected to the connection interface may be charged by the rechargeable battery and/or the external power source.

The charging circuit may be configured to control charging of the rechargeable battery and the smoking substitute device. In particular, the charging circuit may be configured to control pass-through charging, i.e. simultaneous charging of the rechargeable battery in the charger and of the smoking substitute device. The charging circuit may include an appropriately programmed microcontroller for controlling the charging. In some cases, the pass-through charging may be controlled by external circuitry.

As an example, the charging circuit may include the MP2690 charging circuit by Monolithic Power Systems (MPS) (see e.g. www.monolithicpower.com/en/mp2690.html), which is configured to enable pass-through charging. The MP2690 charging circuit includes a pass-through path that can be connected to pass an input voltage from the external power source to the connection interface. The charging circuit may involve one or more power switches (e.g. MOSFETs), to control power paths in the charger (e.g. paths between the external power source, the rechargeable battery in the charger, and the connection interface). Thus, the charging circuit may control how power is routed between the various components. The charging circuit may also include over-voltage and over-current protection circuitry, for example, to protect against voltage or current surges.

The charging circuit may be configured to control whether the smoking substitute device (connected to the connection interface) is charged by the rechargeable battery in the charger or by the external power source, e.g. based on a charge state of the rechargeable battery and the smoking substitute device. This may be achieved, for example, by controlling the states of the power switches on the power paths between the various components. In this manner, efficiency of charging of the rechargeable battery and the smoking substitute device may be improved. For example, if the charging circuit detects that the rechargeable battery is fully charged, the charging circuit may be configured to deliver power only to the connection interface (e.g. via the pass-through path).

The charging assembly may include electrical components that are arranged to provide an output of the rechargeable battery to the connection interface, so that the smoking substitute device may be charged by the rechargeable battery when it is connected to the connection interface. The charging assembly may include a charging circuit that is configured to convert an output of the rechargeable battery to an output that is suitable for charging the smoking substitute device. Such charging circuits make use of conventional electrical components, and are generally known in the field of chargers.

The connection interface of the charger may be arranged to electrically connect to a corresponding interface (or connector) on the smoking substitute device, to form an electrical connection between the rechargeable battery and the smoking substitute device. In this manner, the rechargeable battery in the charger may charge the smoking substitute device. For example, the connection interface may include a plug that is arranged to engage a corresponding socket on the smoking substitute device (or vice versa). As an example, the connection interface may include a USB interface, e.g. a USB-C interface. In this manner, a smoking substitute device having a corresponding USB connector may be charged by the charger. A USB-C interface does not have different "up" and "down" orientations, which may facilitate connecting the smoking substitute device to the connection interface, as a user may connect the smoking substitute device to the USB-C interface in either of the two possible orientations.

In some embodiments, the body may be mountable on an end of the smoking substitute device; and the connection interface may be disposed in the body and arranged to connect to the smoking substitute device when the body is mounted on the end of the smoking substitute device. In this manner, the body of the charger may be mounted on the end of the smoking substitute device to connect the connection interface to the smoking substitute device and charge the smoking substitute device. This may facilitate use of the smoking substitute device during charging, as the body of the charger may be mounted on the end of the smoking substitute device. This may avoid the need for a cable between the charger smoking substitute device, which could get in the user's way during use, and/or restrict the user's ability to use the device during charging (e.g. due to a limited length of the cable).

The body may be configured (e.g. dimensioned and shaped) to be portable and/or unobtrusive, such that when the body is mounted on the end of the smoking substitute device the user may use the smoking substitute device in the same manner in which they would use the smoking substitute device were it not mounted to the body. In an embodiment, the charger may take the general form of a socket or cap type structure designed to fit over only the end portion of the smoking substitute device. For example, the body may be shaped to appear as a part with the smoking substitute device when it is mounted on the end of the smoking substitute device. In this manner, the body may appear as an extension to the smoking substitute device when it is mounted on the end of the smoking substitute device. The body may be dimensioned such that a maximum width of the body is similar to or substantially the same as a maximum width of the smoking substitute device. In this manner, when the body is mounted on the end of the smoking substitute device, the body may not significantly protrude beyond the width of the smoking substitute device. This may make the presence of the body on the end of the smoking substitute device unobtrusive to the user, thus facilitating use of the smoking substitute device during charging. In some cases, the maximum width of the body may be arranged to exceed the maximum width of the smoking substitute device by at most 2 mm, 4 mm, 6 mm, 8 mm or 10 mm. In this manner, when the body is mounted on the end of the smoking substitute device, it may only protrude beyond the width of the smoking substitute device by a small distance, so that it does not get in the way of the user. Accordingly, such embodiments may be advantageous over, for example, a charging dock or station, which would be too large or cumbersome to leave attached when a user brings the smoking substitute device to their mouth for use. Moreover, given the increased size and weight of a charging dock or station, it is likely that the dock or station would detach when the user starts pulling the smoking substitute device to their mouth (e.g. the interference fit would fail). Additionally, such embodiments may be advantageous over, for example, a charging case which would have a larger form factor, for example, the case would likely enclose a majority or an entirety of the smoking substitute device. On the other hand, since the charger of the present embodiment encloses only a minority or end portion of the smoking substitute device, it has significantly less weight and so would be easier to use and carry around.

The body may include a cavity arranged to receive the end of the smoking substitute device, the cavity having a shape (e.g. a cross-sectional shape) complementary to a shape (e.g. a cross-sectional shape) of the end of the smoking substitute device. In this manner, when the body is mounted on the end of the smoking substitute device, the end of the smoking substitute device may be received in the cavity. This may serve to secure the body on the end of the smoking substitute device when it is mounted thereon, in order to prevent the body from falling off during charging. The body may be arranged such that, when the body is mounted on the end of the smoking substitute device, only the end of the smoking substitute device is disposed within the cavity, whilst the remainder of the smoking substitute device is exposed, i.e. the remainder of the smoking substitute device is disposed outside of the body. As a result, the remainder of the smoking substitute device may be available for holding by the user, so that the user may easily hold and use the smoking substitute device during use. Thus, the charger may not get in the way of the user, as it is only disposed at the end of the smoking substitute device.

The cavity may be arranged to form an interference fit with the end of the smoking substitute device when the end of the smoking substitute device is received in the cavity. In this manner, the body of the charger may be retained on the end of the smoking substitute device by means of a frictional force between an outer surface of the end of the smoking substitute and a wall of the cavity. Thus, the body of the charger may be prevented from falling off the end of the smoking substitute device, which may facilitate use of the smoking substitute device during charging. As an example, a cross-sectional shape of the cavity may be arranged to substantially match a cross-sectional shape of the end of the smoking substitute device, so that an interference fit is formed between the end of the smoking substitute device and the cavity when the end of the smoking substitute device is received in the cavity.

The connection interface may be disposed in the cavity. In this manner, when the end of the smoking substitute device is inserted into the cavity, a corresponding connector on the end of the smoking substitute device may engage the connection interface. For example, the connection interface may be disposed in a base of the cavity. This may facilitate connecting the connection interface to the smoking substitute device, as the connection may be made by pushing the end of the smoking substitute device into the cavity.

The body of the charger may further include securing means (or mechanism) for securing the body to the end of the smoking substitute device when the body is mounted on the end of the smoking substitute device. The securing means may serve to apply a retaining or gripping force to the smoking substitute device to securely hold the body on the end of the smoking substitute device, to prevent it from falling off. This may facilitate use of the smoking substitute device during charging. The securing means may be any suitable means for securing the body to the end of the smoking substitute device.

For example, the securing means may comprise a pair of opposing clamping members extending from the body and arranged to press against an outer surface of the smoking substitute device when the body is mounted on the end of the smoking substitute device. In this manner, when the body is mounted on the end of the smoking substitute device, the opposing clamping members may press against the outer surface of the smoking substitute device and exert a retaining force thereon. Each of the clamping members may be formed by a respective protrusion on a side of the body which is arranged to press against the outer surface of the smoking substitute device when the body is mounted on the end of the smoking substitute device. The pair of opposing clamping members may be disposed on opposite sides of the body, so that they are arranged to press against the outer surface of the smoking substitute device in opposite directions. As a result, the smoking substitute device may be securely clamped between the clamping members so that the body of the charger is retained on the end of the smoking substitute device.

Other types of securing means for securing the body to the end of the smoking substitute device may also be used. For example, the body may include a threaded portion for forming a threaded connection with a corresponding threaded part on the end of the smoking substitute device. As another example, a releasable lock mechanism for locking the body to the end of the smoking substitute system.

The rechargeable battery may be arranged in the body such that, when the body is mounted on the end of the smoking substitute device, the rechargeable battery is located beyond the end of the smoking substitute device, in a longitudinal direction of the smoking substitute device. This may avoid the battery being disposed along a side of the smoking substitute device when the body is mounted on the end of the smoking substitute device, where it could get in the user's way. This arrangement may thus facilitate use of the smoking substitute device during charging, as it may avoid the body and rechargeable battery getting in the user's way when the body is mounted on the end of the smoking substitute device.

The charger may further include a cable for connecting the charger to an external power source. In this manner, power from the external power source may be conveyed to the charger via the cable. For example, the cable may have a connector (e.g. plug) at one end which is configured to engage a corresponding interface (e.g. socket) on the external power source.

The cable may be any suitable cable arranged to convey power from an external power source to charge the rechargeable battery. The cable may be electrically connected to the charging circuit for the rechargeable battery.

In some embodiments, the cable may be removably connectable to the body of the charger. In this manner, the cable may be connected to the charger in order to charge the charger and/or smoking substitute device using an external power source. As discussed above, when the cable is connected to the body, power from the external power source conveyed by the cable may charge the rechargeable battery in the body. Then, when connection to the external power source is not needed, the cable may be disconnected from the body. For example, the cable may include a connector arranged to engage a corresponding connector on the body of the charger.

The cable may, for example, be a USB cable. In cases where the cable is removably connectable to the body of the charger, the body may include a USB connector arranged to engage a corresponding USB connector on the USB cable.

The cable may be at least 10 cm long. A cable having this length may be sufficiently long to enable a user to use the smoking substitute device when it is being charged by the charger, with the charger being connected to an external power source via the cable. In this manner, the user may conveniently use the smoking substitute device whilst both the smoking substitute device and the rechargeable battery in the charger are being charged. In some cases, the cable may be at least 20 cm long, 30 cm long, 35 cm long, 40 cm long, or 45 cm long. A longer cable may be preferred, as it may provide more flexibility to the user for using the smoking substitute device during charging.

According to a second aspect of the invention, the charger may form part of a smoking substitute system. The smoking substitute system of the second aspect of the invention comprises: a smoking substitute device; and a charger according to the first aspect of the invention; wherein, when the connection interface of the charger is connected to the smoking substitute device and the charger is connected to the external power source. As in the first aspect of the invention, the charger is configured to simultaneously charge the rechargeable battery and the smoking substitute device. The charger may have any of the features discussed above in relation to the first aspect of the invention.

As discussed in relation to the first aspect of the invention, the body of the charger may be mountable on an end of the smoking substitute device; and the connection interface may be disposed in the body and arranged to connect to the smoking substitute device when the body is mounted on the end of the smoking substitute device. The body may include a cavity arranged to receive the end of the smoking substitute device, the cavity having a shape (e.g. a cross-sectional shape) complementary to a shape (e.g. a cross-sectional shape) of the end of the smoking substitute device. The cavity may be arranged to form an interference fit with the end of the smoking substitute device when the end of the smoking substitute device is received in the cavity. The connection interface may be disposed in the cavity.

The body may further include a securing means (e.g. securing mechanism) for securing the body to the end of the smoking substitute device when the body is mounted on the end of the smoking substitute device. The securing means may comprise a pair of opposing clamping members extending from the body and arranged to press against an outer surface of the smoking substitute device when the body is mounted on the end of the smoking substitute device.

The rechargeable battery may be arranged in the body such that, when the body is mounted on the end of the smoking substitute device, the rechargeable battery is located beyond the end of the smoking substitute device, in a longitudinal direction of the smoking substitute device.

The smoking substitute device may be in the form of a main body that is engageable with a consumable, e.g. the main body and the consumable may be configured to be physically coupled together. For example, the consumable may be at least partially received in a recess of the main body, such that there is an interference fit between the main body and the consumable. Alternatively, the main body and the consumable may be physically coupled together by screwing one onto the other, or through a bayonet fitting. Thus, a first end of the consumable may be arranged to be coupled with the main body, whilst an opposing end of the consumable may define a mouthpiece of the smoking substitute device.

The smoking substitute device may comprise a reservoir configured to store an aerosol former, such as an e-liquid. For example, the reservoir may be disposed in a consumable of the device. The e-liquid may, for example, comprise a base liquid and e.g. nicotine. The base liquid may include propylene glycol and/or vegetable glycerine.

The reservoir may be in the form of a tank. At least a portion of the tank may be translucent. For example, the tank may comprise a window to allow a user to visually assess the quantity of e-liquid in the tank. A housing of the smoking substitute device may comprise a corresponding aperture (or slot) or window that may be aligned with a translucent portion (e.g. window) of the tank. The reservoir may be referred to as a "clearomizer" if it includes a window, or a "cartomizer" if it does not.

The smoking substitute device may comprise a passage for fluid flow therethrough. The passage may extend through (at least a portion of) the smoking substitute device, between openings that may define an inlet and an outlet of the passage. The outlet may be at a mouthpiece of the smoking substitute device. In this respect, a user may draw fluid (e.g. air) into and through the passage by inhaling at the outlet (i.e. using the mouthpiece). The passage may be at least partially defined by the tank. The tank may substantially (or fully) define the passage. In this respect, the tank may surround the passage.

The smoking substitute device may comprise an aerosol-generator. The aerosol generator may comprise a wick. The aerosol generator may further comprise a heater. The wick may comprise a porous material. A portion of the wick may be exposed to fluid flow in the passage. The wick may also comprise one or more portions in contact with liquid stored in the reservoir. For example, opposing ends of the wick may protrude into the reservoir and a central portion (between the ends) may extend across the passage so as to be exposed to fluid flow in the passage. Thus, fluid may be drawn (e.g. by capillary action) along the wick, from the reservoir to the exposed portion of the wick.

The heater may comprise a heating element, which may be in the form of a filament wound about the wick (e.g. the filament may extend helically about the wick). The filament may be wound about the exposed portion of the wick. The heating element may be electrically connected (or connectable) to a power source. Thus, in operation, the power source may supply electricity to (i.e. apply a voltage across) the heating element so as to heat the heating element. This may cause liquid stored in the wick (i.e. drawn from the tank) to be heated so as to form a vapour and become entrained in fluid flowing through the passage. This vapour may subsequently cool to form an aerosol in the passage.

The smoking substitute device (e.g. the main body of the smoking substitute device) may comprise an internal power source. The internal power source may be electrically connected (or connectable) to a heater of the smoking substitute device (e.g. when engaged with the main body). The power source may be a battery (e.g. a rechargeable battery). A connector in the form of e.g. a USB port may be provided for recharging this battery.

When the smoking substitute device is in the form of a main body that is engageable with a consumable, the consumable may comprise an electrical interface for interfacing with a corresponding electrical interface of the main body. One or both of the electrical interfaces may include one or more electrical contacts. Thus, when the main body is engaged with the consumable, the electrical interface may be configured to transfer electrical power from the power source to a heater of the consumable.

The electrical interface may also be used to identify the smoking substitute device (in the form of a consumable) from a list of known types. For example, the consumable may have a certain concentration of nicotine and the electrical interface may be used to identify this. The electrical interface may additionally or alternatively be used to identify when a consumable is connected to the main body.

The smoking substitute device (e.g. the main body) may comprise a controller, which may include a microprocessor. The controller may be configured to control the supply of power from the power source to the heater (e.g. via the electrical contacts). A memory may be provided and may be operatively connected to the controller. The memory may include non-volatile memory. The memory may include instructions which, when implemented, cause the controller to perform certain tasks or steps of a method.

The smoking substitute device may comprise a wireless interface, which may be configured to communicate wirelessly with another device, for example a mobile device, e.g. via Bluetooth®. To this end, the wireless interface could include a Bluetooth® antenna. Other wireless communication interfaces, e.g. WiFi®, are also possible. The wireless interface may also be configured to communicate wirelessly with a remote server.

A puff sensor may be provided that is configured to detect a puff (i.e. inhalation from a user). The puff sensor may be operatively connected to the controller so as to be able to provide a signal to the controller that is indicative of a puff state (i.e. puffing or not puffing). The puff sensor may, for example, be in the form of a pressure sensor or an acoustic sensor. That is, the controller may control power supply to the heater of the consumable in response to a puff detection by the sensor. The control may be in the form of activation of the heater in response to a detected puff. That is, the smoking substitute device may be configured to be activated when a puff is detected by the puff sensor.

The invention includes the combination of the aspects and preferred features described except where such a combination is clearly impermissible or expressly avoided.

### Summary of the Figures

So that the invention may be understood, and so that further aspects and features thereof may be appreciated, embodiments illustrating the principles of the invention will now be discussed in further detail with reference to the accompanying figures, in which:
Figure 1 is a cross-sectional diagram of a charger according to an embodiment of the invention;
Figure 2 is a perspective view of a smoking substitute system according to an embodiment of the invention;
Figure 3A is a front view of a smoking substitute device which may form part of a smoking substitute system according to an embodiment of the invention, where the smoking substitute device is in an engaged position;
Figure 3B is a front view of the smoking substitute device of Figure 3A, where the smoking substitute device is in a disengaged position;
Figure 3C is cross-sectional diagram of a consumable of the smoking substitute device of Figure 3A; and
Figure 3D is a front view of an end face of a main body of the smoking substitute device of Figure 3A.

### Detailed Description of the Invention

Aspects and embodiments of the present invention will now be discussed with reference to the accompanying figures. Further aspects and embodiments will be apparent to those skilled in the art.

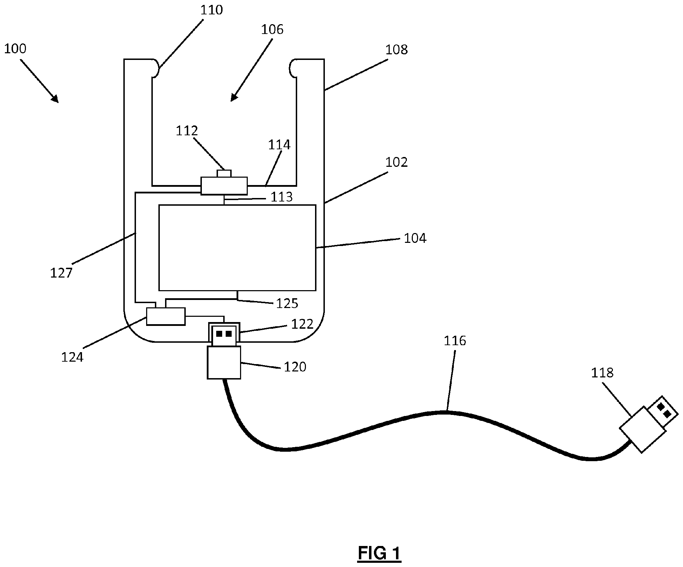

Figure 1 shows a cross-sectional diagram of a charger 100 according to an embodiment of the invention. The charger 100 includes a body 102 having a rechargeable battery 104 disposed therein. The body 102 is mountable on an end of a smoking substitute device (e.g. smoking substitute device 301 discussed below). The body 102 includes a cavity 106 arranged to receive the end of the smoking substitute device. Specifically, the cavity 106 has a shape that is complementary to a shape of the end of the smoking substitute device, so that an interference fit may be formed between the end of the smoking substitute device and the cavity 106 when the end of the smoking substitute device is received in the cavity 106.

The body 102 further comprises securing means in the form of a pair of opposing clamping members 108 which extend from the body 102 and are arranged to press against an outer surface of the smoking substitute device when the end of the smoking substitute device is received in the cavity 106. The opposing clamping members 108 are disposed on opposite sides of the body 102, and each include a respective protrusion 110 which is arranged to abut against the outer surface of the smoking substituted device and exert a retaining force thereon when the end of the smoking substitute device is received in the cavity 106. As the clamping members 108 are disposed on opposite sides of the body 102, they may press against the outer surface of the smoking substitute device in opposite directions. In this manner, the smoking substitute device may be effectively clamped between the clamping members 108, to prevent the body 102 from falling off the end of the smoking substitute device when the body 102 is mounted thereon.

The charger 100 further includes a connection interface 112 disposed in the cavity 106 in the body 102, and located on a base 114 of the cavity 106. The connection interface 112 is arranged to connect to a corresponding connector on the end of the smoking substitute device when the end of the smoking substitute device is received in the cavity 106. The connection interface 112 may, for example, be a USB interface (e.g. a USB-C interface) arranged to engage a corresponding USB connector on the end of the smoking substitute device.

The connection interface 112 is electrically connected to the rechargeable battery 104 via a first path 113, so that when the smoking substitute device is connected to the connection interface, power from the rechargeable battery 104 may be conveyed to the smoking substitute device to charge the smoking substitute device. In other words, an output of the rechargeable battery 104 may be connected to the connection interface 112.

The charger 100 further includes a cable 116 in the form of a USB cable for electrically connecting the charger to an external power source (not shown). The cable 116 includes a first USB connector 118 for connection to an external power source, and a second USB connector 120 which is removably connectable to an input connector 122 in the body 102 of the charger 100. The input connector 122 is electrically connected to a charging circuit 124 for the rechargeable battery 104, the charging circuit 124 being disposed within the body 102. The charging circuit 124 is connected to the rechargeable battery 104 via a second path 125. The charging circuit 124 is configured to charge the rechargeable battery 104 using power from the external power source conveyed by the cable 116. In this manner, when the first USB connector 118 is connected to an external power source and the second USB connector 120 is connected to the input connector 122, the rechargeable battery 104 may be charged by the external power source. The charging circuit 124 is further connected to the connection interface 112 via a pass-through path 127, e.g. so that power (or an input voltage) from the external power source may be passed to the connection interface 112. In this manner, a smoking substitute device connected to the connection interface 112 may be charged by the external power source.

In the example shown, both the first and second USB connectors are of a same type. However, in other examples, different types of connectors may be used. For example, the second USB connector may be a micro-USB or a USB-C connector (with the input connector 122 being adapted accordingly). In further examples, types of connectors other than USB connectors may be used.

The charger 100 is configured to enable pass-through charging, such that, when a smoking substitute device is connected to the connection interface 112 and the charger is connected to an external power source via the cable 116, both the smoking substitute device and the rechargeable battery 104 may be charged simultaneously.

The charging circuit 124 is configured to control charging of the rechargeable battery 104 and of the smoking substitute device via connection interface 112. In particular, the charging circuit 124 may control the first path 113, second path 125 and pass-through path 127 via a set of power switches, e.g. MOSFETs (not shown), in order to control power delivered via these paths. In this manner, the charging circuit 124 may control charging of the rechargeable battery 104 via the second path 125, and charging of the smoking substitute device via first path 113 and pass-through path 127. A smoking substitute device connected to the connection interface may be charged by the rechargeable battery 104 (via first path 113), and/or by the external power source (via pass-through path 127). The charging circuit may further include over-voltage and over-current protection circuitry (not shown), for example, to protect against voltage or current surges.

The charging circuit 124 may be configured to control whether the smoking substitute device is charged by the rechargeable battery 104 (via first path 113), or by the external power source (via pass-through path 127) depending on a charge state of the smoking substitute device and a charge state of the rechargeable battery 104. For example, if both the rechargeable battery 104 and the smoking substitute device have a low charge, then the charging circuit 124 may route power from the external power source to both the rechargeable battery 104 and the connection interface 112. If the rechargeable battery 104 is fully charged but the smoking substitute device is not fully charged, then the charging circuit 124 may route power from the external power source to the connection interface 112 only. When the charger 100 is disconnected from the external power source and the smoking substitute device is connected to the connection interface, then the charging circuit 124 may route power from the rechargeable battery to the connection interface 112, to charge the smoking substitute device.

In Figure 1, the connections shown between the input connector 122, the charging circuit 124, the rechargeable battery 104 and the connection interface 112 are schematic in nature, and are not to be construed as limiting electrical connections between these components to a specific configuration. The input connector 122, charging circuit 124, rechargeable battery 104 and the connection interface 112 may be connected via suitable electrical components known in the art, as would be evident to the skilled person. In some cases, further electrical components may be included in the body of the charger in addition to those illustrated. For example, in some cases, the connection interface 112 may be connected to the rechargeable battery 104 via a second charging circuit (not shown), which is configured to control charging by the rechargeable battery 104 and/or convert an output of the rechargeable battery 104 to a level that is suitable for charging the smoking substitute device. In other examples, the charging circuit 124 may be configured to control charging of both the rechargeable battery 104 and of a smoking substitute device connected to the connection interface 112, that is, the charging circuit 124 may also provide the functionality of the aforementioned second charging circuit.

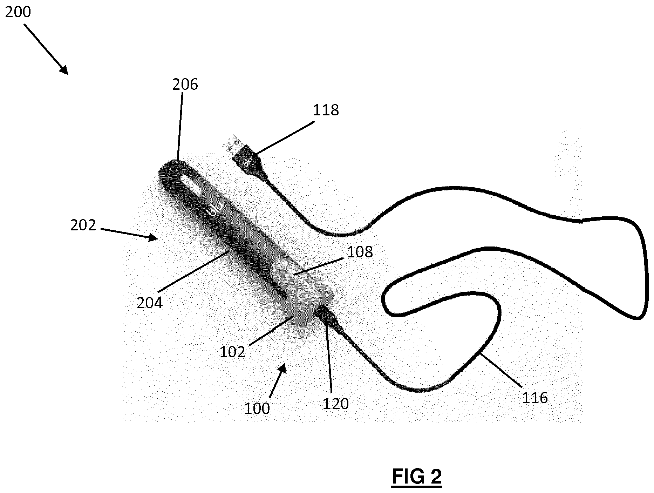

Figure 2 shows a perspective view of a smoking substitute system 200 according to an embodiment of the invention. The system 200 includes charger 100 described above, and a smoking substitute device 202. The smoking substitute device 202 may be similar in configuration to the smoking substitute device 301 described below. The smoking substitute device 202 includes a main body 204 which contains a rechargeable battery, and a consumable 206 which is engaged with the main body 204. The consumable 206 defines a mouthpiece of the smoking substitute device 202.

In Figure 2, the body 102 of the charger 100 is mounted on an end of the main body 204 of the smoking substitute device 202. The end of the main body 204 is received in the cavity 106 of the body 102 of the charger 100. Furthermore, a connector (not shown) on the end of the main body 204 of the smoking substitute device 202 is engaged with the connection interface 112 of the charger 100. In this manner, the main body 204 of the smoking substitute device 202 may be charged by the rechargeable battery 104 in the charger 100.

The cavity 106 has a shape (e.g. a cross-sectional shape) that is complementary to a shape (e.g. a cross-sectional shape) of the end of the main body 204 of the smoking substitute device 202. In this manner, when the end of the main body 204 of the smoking substitute device 202 is received in the cavity 106, and interference fit may be formed between the cavity 106 and the main body 204. Moreover, the clamping members 108 on the body 102 of the charger 100 are arranged to press against an outer surface of the main body 204 of the smoking substitute device 202 when the end of the main body 204 is received in the cavity 106. In this manner, the body 102 of the charger 100 may be securely held on the end of the main body 204 of the smoking substitute device 202.

In the configuration shown in Figure 2, the main body 204 of the smoking substitute device 202 may be charged by the rechargeable battery 104 in the charger 100, via the connection interface 112. During charging of the smoking substitute device 202 by the rechargeable battery 104 in the charger, the second USB connector 120 may be disconnected from the input connector 122 on the body 102 of the charger 100, so that the cable 116 does not get in the user's way. This may facilitate use of the smoking substitute device 202 during charging. In this manner, a user may be mobile during charging of the smoking substitute device 202. Of course, the second USB connector 120 can be left plugged into the input connector 122 while the smoking substitute device 202 is charged by the rechargeable battery 104.

When a charge of the rechargeable battery 104 in the charger 100 becomes depleted, the charger 100 may be connected to an external power source to charge the rechargeable battery 104 and the main body 204 of the smoking substitute device 202. For example, the first USB connector 118 may be connected to a USB port of a computer to receive power from the computer. Note that the main body 204 of the smoking substitute device 202 need not necessarily be connected to the connection interface 112 during charging of the rechargeable battery 104 of the charger; for example, the main body 204 may be disconnected from the connection interface 112 when the charger 100 is connected to an external power source, in which case only the rechargeable battery 104 is charged. When the main body 204 of the smoking substitute device 202 is connected to the connection interface 112, and the charger 100 is connected to an external power source, both the main body 204 and the rechargeable battery 104 in the charger are simultaneously charged via pass-through charging, as discussed above.

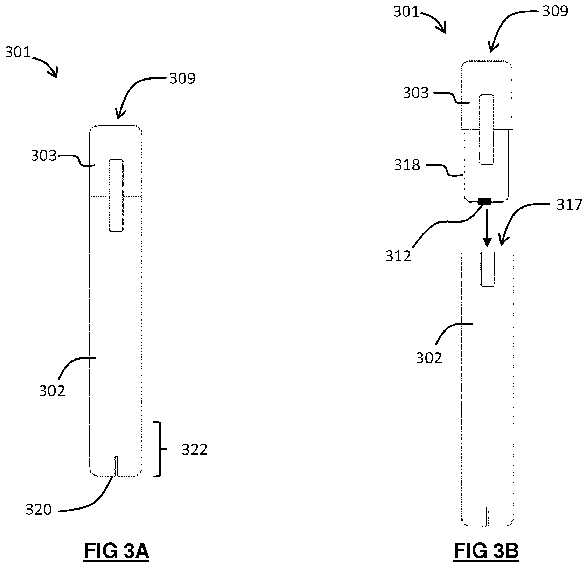

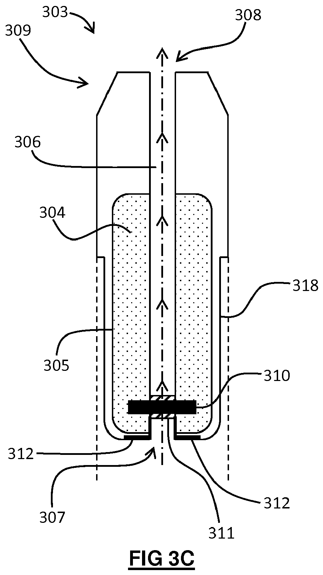

Figures 3A and 3B illustrate a smoking substitute device in the form of an e-cigarette device 301. The device 301 may be used as part of a smoking substitute system according to an embodiment of the invention. For example, the device 301 may correspond to the smoking substitute device 202 in system 200 illustrated in Figure 2. The device 301 comprises a main body 302 of the device 301, and an consumable 303 in the form of an e-cigarette cartridge (or "pod"). In the illustrated embodiment the consumable 303 is removable from the main body 302, so as to be a replaceable component of the device 301. In other words, the e-cigarette device 301 is a "closed system" device. The consumable 303 is illustrated in more detail in Figure 3C, which shows a cross-sectional diagram of the consumable 303.

As is apparent from Figures 3A and 3B, the consumable 303 is configured to engage the main body 302. The main body 302 includes an engagement portion 317, which is in the form of a cavity disposed at a first end of the main body 302. The engagement portion 317 of the main body 302 is arranged to engage an engagement portion 318 on the consumable 303. Figure 3A shows the main body 302 and the consumable 303 in an engaged state, whilst Figure 3B shows the main body 302 and the consumable 303 in a disengaged state. When engaged, a portion of the consumable 303 is received in a cavity of the main body 302 and is retained in the engaged position by way of a snap-engagement mechanism. In other embodiments, the main body 302 and consumable 303 may be engaged by screwing one into (or onto) the other, through a bayonet fitting, or by way of an interference fit.

The device 301 is configured to vaporise an aerosol-former, which in the illustrated embodiment, is in the form of a nicotine-based e-liquid 304. The e-liquid 304 comprises nicotine and a base liquid including propylene glycol and/or vegetable glycerine.

As is more apparent from Figure 3C, this e-liquid 304 is stored within a reservoir in the form of a tank 305 that forms part of the consumable 303. In the illustrated embodiment, the consumable 303 is a "single-use" consumable 303. That is, upon exhausting the e-liquid 304 in the tank 305, the intention is that the user disposes of the entire consumable 303. In other embodiments, the e-liquid (i.e. aerosol former) may be the only part of the system that is truly "single-use". That is, the tank may be refillable with e-liquid or the e-liquid may be stored in a non-consumable component of the device. For example, the e-liquid may be stored in a tank located in the main body 302 or stored in another component that is itself not single-use (e.g. a refillable cartomizer).

The tank 305 surrounds, and thus defines a portion of, a passage 306 that extends between an inlet 307 and an outlet 308 at opposing ends of the consumable 303. In this respect, the passage comprises an upstream end at the end of the consumable 303 that engages with the main body 302, and a downstream end at an opposing end of the consumable 303 that comprises a mouthpiece 309 of the device 301. When the consumable 303 is engaged with the main body 302, a user can inhale (i.e. take a puff) via the mouthpiece 309 so as to draw air through the passage 306, and so as to form an airflow (indicated by arrows) in a direction from the inlet 307 to the outlet 308 of the passage 306. Although not illustrated, the passage 306 may be partially defined by a tube (e.g. a metal tube) extending through the consumable 303. The passage 306 is in fluid communication with a gap defined between the consumable 303 and the main body 302 (when engaged) such that air outside of the device 301 is drawn into the passage 306 (during an inhale).

The smoking substitute device 301 is configured to vaporise the e-liquid 304 for inhalation by a user. To provide this, the consumable 303 comprises a heater having of a porous wick 310 and a resistive heating element in the form of a heating filament 311 that is helically wound around a portion of the porous wick 310. The porous wick 310 extends across the passage 306 (i.e. transverse to a longitudinal axis of the passage306) and opposing ends of the wick 310 extend into the tank 305 (so as to be submerged in the e-liquid 304). In this way, e-liquid 304 contained in the tank 305 is conveyed from the opposing ends of the porous wick 310 to a central portion of the porous wick 310 so as to be exposed to the airflow in the passage 306 (i.e. caused by a user inhaling).

The helical filament 311 is wound about this exposed central portion of the porous wick 310 and is electrically connected to an electrical interface in the form of electrical contacts 312 mounted at the end of the consumable that is proximate the main body 302 (when engaged). When the consumable 303 is engaged with the main body 302, the electrical contacts 312 contact corresponding electrical contacts (not shown) of the main body 302. The main body electrical contacts are electrically connected to a power source (not shown) of the main body 302, such that (in the engaged position) the filament 311 is electrically connected to the power source. In this way, power can be supplied by the main body 302 to the filament 311 in order to heat the filament 311. This heat is transferred from the filament 311 to the porous wick 310 which causes e-liquid 304 conveyed by the porous wick 310 to increase in temperature to a point at which it vaporises. The vaporised e-liquid becomes entrained in the airflow and, between the vaporisation point at the filament 311 and the outlet 308 of the passage 306, condenses to form an aerosol. This aerosol is then inhaled, via the mouthpiece 309, by a user of the system 301.

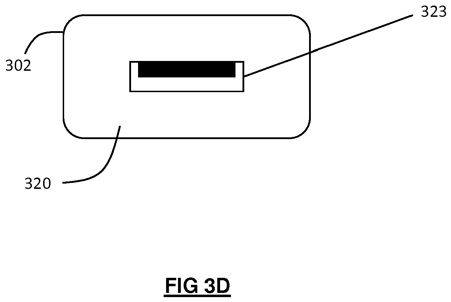

The power source of the main body 302 is in the form of a rechargeable battery. The main body 302 comprises a connector 323in the form of e.g. a USB port for recharging this battery. The connector 323 is disposed on an end face 320 of the main body 302, which is at a second end of the main body 302, opposite the first end comprising the engagement portion 317. The connector 323 is arranged to engage a corresponding connection interface (e.g. connection interface 112 discussed above) in a charger to recharge the battery. The end face 320 of the main body 302 is illustrated in Figure 3D.

The main body 302 may also comprise a controller that controls the supply of power from the power source to the main body electrical contacts (and thus to the filament 311). That, is the controller may be configured to control a voltage applied across the main body electrical contacts, and thus the voltage applied across the filament 311. In this way, the filament 311 may only be heated under certain conditions (e.g. during a puff and/or only when the system is in an active state). In this respect, the main body 302 may include a puff sensor (not shown) that is configured to detect a puff (i.e. inhalation). The puff sensor may be operatively connected to the controller so as to be able to provide a signal, to the controller, which is indicative of a puff state (i.e. puffing or not puffing). The puff sensor may, for example, be in the form of a pressure sensor or an acoustic sensor.

Although not shown, the main body 302 and consumable 303 may comprise a further interface which may, for example, be in the form of an RFID reader, a barcode or QR code reader. This interface may be able to identify a characteristic (e.g. a type) of a consumable 303 engaged with the main body 302. In this respect, the consumable 303 may include any one or more of an RFID chip, a barcode or QR code, or memory within which is an identifier and which can be interrogated via the interface.

An end portion 322 of the main body 302, which includes the end face 320 with the connector, is shaped so that it is receivable in a cavity of a charger (e.g. cavity 106 of charger 100). In particular, a cross-sectional shape of the end portion 322 of the main body 302 may correspond to a cross-sectional shape of the cavity, so that an interference fit may be formed when the main body 302 is inserted into the cavity. Moreover, the connector on the end face 320 is arranged to engage a corresponding connection interface (e.g. connection interface 112) disposed in the cavity when the end portion 322 is received in the cavity. In this manner, when the end portion 322 of the main body 302 is received in the cavity of a charger, the main body 302 may be connected to the charger via the connector on its end face 320, so that the battery in the main body 302 may be recharged.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the words "have", "comprise", and "include", and variations such as "having", "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means, for example, +/- 10%.

The words "preferred" and "preferably" are used herein refer to embodiments of the invention that may provide certain benefits under some circumstances. It is to be appreciated, however, that other embodiments may also be preferred under the same or different circumstances. The recitation of one or more preferred embodiments therefore does not mean or imply that other embodiments are not useful, and is not intended to exclude other embodiments from the scope of the disclosure, or from the scope of the claims.

## Claims

1. A charger for a smoking substitute device, the charger comprising:
a body having a rechargeable battery disposed therein; and
a charging assembly for charging the smoking substitute device from the rechargeable battery, the charging assembly comprising a connection interface arranged to connect to the smoking substitute device;
wherein the charger is connectable to an external power source such that, when the connection interface is connected to the smoking substitute device and the charger is connected to the external power source, the charger is configured to simultaneously charge the rechargeable battery and the smoking substitute device.

2. A charger according to claim 1, wherein:
the body is mountable on an end of the smoking substitute device; and
the connection interface is disposed in the body and arranged to connect to the smoking substitute device when the body is mounted on the end of the smoking substitute device.

3. A charger according to claim 2, wherein the body includes a cavity arranged to receive the end of the smoking substitute device, the cavity having a shape complementary to a shape of the end of the smoking substitute device.

4. A charger according to claim 3, wherein the cavity is arranged to form an interference fit with the end of the smoking substitute device when the end of the smoking substitute device is received in the cavity.

5. A charger according to claim 3 or 4, wherein the connection interface is disposed in the cavity.

6. A charger according to any one of claims 2 to 5, wherein the body further includes securing means for securing the body to the end of the smoking substitute device when the body is mounted on the end of the smoking substitute device.

7. A charger according to claim 6, wherein the securing means comprises a pair of opposing clamping members extending from the body and arranged to press against an outer surface of the smoking substitute device when the body is mounted on the end of the smoking substitute device.

8. A charger according to any one of claims 2 to 7, wherein the rechargeable battery is arranged in the body such that, when the body is mounted on the end of the smoking substitute device, the rechargeable battery is located beyond the end of the smoking substitute device, in a longitudinal direction of the smoking substitute device.

9. A charger according to any preceding claim, further including a cable for connecting the charger to the external power source.

10. A charger according to claim 9, wherein the cable is removably connectable to the body of the charger.

11. A charger according to claim 9 or 10, wherein the cable is a USB cable.

12. A charger according to one of claims 9 to 11, wherein the cable is at least 10 cm long.

13. A smoking substitute system comprising:
a smoking substitute device; and
a charger according to any one of claims 1 to 12;
wherein, when the connection interface of the charger is connected to the smoking substitute device and the charger is connected to the external power source, the charger is configured to simultaneously charge the rechargeable battery and the smoking substitute device.
